# EUROPÄISCHE PATENTANMELDUNG

(11) **EP 1 013 507 A2**
(43) Veröffentlichungstag der Anmeldung: **28.06.2000**
(21) Anmeldenummer: 99120962.8
(22) Anmeldetag: 03.11.1999
(51) Int. Cl.: B60R 16/02

(54) **Multifunktionales Bedienelement für Kraftfahrzeuge**

(30) Priorität: 24.11.1998 DE 19854116
(71) Anmelder: Volkswagen Aktiengesellschaft, 38436 Wolfsburg (DE)
(72) Erfinder: Golisch, Frank, Dipl.-Ing., 38108 Braunschweig (DE); Dobberkau, Thomas, 38527 Meine (DE); Kriegel, Dieter, Dipl.-Ing., 38528 Adenbüttel (DE); Sievers, Stefan, 38553 Wasbüttel (DE)

(57) **Zusammenfassung**

Die Erfindung betrifft ein multifunktionale Bedieneinrichtung für Kraftfahrzeuge mit einer alphanumerischen Eingabe- und Anzeigeeinheit, wobei die Eingabeeinheit ein zumindest drehbetätigbares Bedienelement aufweist, über welches auf der Anzeigeneinheit dargestellte alphanumerische Zeichen oder Symbole auswähl - und zu einer Zeichen- oder Funktionsgruppe zusammenstellbar sind. Um bei einem multifunktionalen Bedienelement dieser Art eine bessere Handhabbarkeit bei Löschvorgängen zu erreichen, ist erfindungsgemäß vorgeschlagen, daß zur Aufhebung des jeweils zuletzt angewählten oder an letzter Stelle stehenden Zeichens eine separate Löschtaste vorgesehen ist.

## Beschreibung

Die Erfindung betrifft eine multifunktionale Bedieneinrichtung für Kraftfahrzeuge mit einer alphanumerischen Eingabe- und Anzeigeeinheit, wobei die Eingabeeinheit ein zumindest drehbetätigbares Bedienelement aufweist, über welches auf der Anzeigeneinheit dargestellte alphanumerischen Zeichen oder Symbole auswähl- und zu einer Zeichen- oder Funktionsgruppe zusammenstellbar sind, gemäß Oberbegriff des Patentanspruches 1.

Eine Vielzahl von Anzeigen sind in Kraftfahrzeugen mittlerweile alphanumerisch. Dies gilt insbesondere bei Anzeige- oder Eingabeeinheiten für Autotelefon, für das Radio oder auch für Navigationseinrichtungen. Insbesondere bei Navigationseinrichtungen ist es daher notwendig, eine Eingabemöglichkeit auch von Buchstaben oder von Wörtern zu schaffen. Die Anordnung einer im Kraftfahrzeug insbesondere im Zugriffsbereich des Fahrzeugführers angeordneten Alphabettastatur ist aus Platzgründen nicht möglich. Es bestünde daher die Möglichkeit eine entsprechende Tastatur in verkleinerter Ausführung mit entsprechend verkleinerten Tasten vorzusehen. Die Erfassung aller Buchstaben samt Umlaute sowie auch die Erfassung der Ziffern zwischen 0 und 9 sowie die Vorsehung weiterer Funktionstasten würde ein Tastenfeld von über 40 Tasten notwendig machen. Um es in der Armaturentafel integrieren zu können, müßte es entsprechend klein sein, also auch mit kleinen, recht unhandlich zu bedienenden Tasten. Dies wiederum hätte zur Konsequenz, daß eine Bedienung des Tastenfeldes während der Fahrt enorm gefährlich wäre, da sie die volle Konzentration des Fahrzeugführers auf sich ziehen würde. Eine solche Ausführungsform scheidet somit aus.

Im Stand der Technik sind unter Vermeidung von aufwendigen, groß angelegten Tastenfeldern sog. Speller bekannt, welche in einem Anzeigenfeld das Alphabet und darüber hinaus möglicherweise auch Funktionsfelder anzeigt. Über einen Drehschalter oder sogar Dreh-Tippschalter ist nun ein Cursor-Feld auf dem Anzeigefeld zugeordnet, welches über den Drehschalter betätigbar ist. Es können dann Buchstaben ausgewählt werden, beispielsweise durch eine entsprechende Drehbetätigung und damit eine entsprechend bewirkte Verschiebung des Cursor-Feldes, und durch Antippen des Drehschalters in der dann gewünschten Auswahl des Buchstabens wird der gewählte Buchstabe in ein weiteres Anzeigefeld übernommen und in chronologischer, entsprechend aufeinanderfolgender Auswahl von Buchstaben können dann ganze Wörter bzw. Buchstaben- und Ziffernfolgen ausgewählt werden.

Da die Buchstaben oder Ziffern auf diese Weise relativ aufwendig ausgewählt und aufgereiht werden, kommt der Behandlung von Schreibfehlern und der Notwendigkeit der Korrektur besondere Bedeutung zu.

Aus der EP0366132A2 ist bekannt, die besagte Korrekturfunktion bei einer Eingabeeinheit für ein Navigationssystem zusätzlich in den Druck-/Drehgeber hineinzuimplementieren. Die Korrektur wird dann so vorgenommen, daß der Druck-/Drehgeber zunächst wieder einmal zurück auf die entsprechend fehlerhafte Stelle gefahren werden muß, d. h. der Fehler muß nicht nur gesucht werden, sondern die lokale Bestimmung erfolgt durch ein weitergehendes Betätigen des Druck-/Drehgebers. Eine solche Vorgehensweise lenkt sehr stark vom Verkehrsgeschehen ab und eine Bedienung während einer Fahrt ist fast ausgeschlossen.

Auch aus der EP0701926A2 ist ein an sich vorteilhafter, oben bereits erwähnter sog. Speller bekannt. Auch hierbei erfolgt die Korrektur über den Druck-/Drehgeber. Hieraus ergibt sich der gleiche Nachteil, wie bei der oben beschriebenen bekannten Anordnung.

Der Erfindung liegt somit die Aufgabe zugrunde, ein multifunktionales Bedienelement der gattungsgemäßen Art dahingehend zu verbessern, daß eine Fehlerkorrektur auf einfachere Weise möglich ist.

Die gestellte Aufgabe wird bei einer multifunktionalen Bedieneinrichtung der gattungsgemäßen Art erfindungsgemäß durch die kennzeichnenden Merkmale des Patentanspruches 1 gelöst.

Weitere vorteilhafte Ausgestaltungen der Erfindung sind in den abhängigen Ansprüchen dargestellt.

Kern der vorliegenden Erfindung ist es, bei einer multifunktionalen Bedieneinrichtung der gattungsgemäßen Art ein separates Korrekturelement vorzusehen, mit welcher das zuletzt ausgewählte bzw. an letzter Stelle stehende Zeichen im Anzeigefeld gelöscht werden kann. Somit muß nicht mehr auf die entsprechende zu löschende Stelle alphabetmäßig oder auch sonstwie durch Betätigung des drehbetätigten Bedienelementes eingestellt werden, sondern die Löschung erfolgt sukzessive bezogen auf die letzte Stelle im Anzeigefeld, so oft und so weit die Löschtaste betätigt wird. Ein auswählen der zu löschenden Stelle entfällt, wodurch der Vorgang einfacher und schneller erfolgen kann. Dadurch ist die vom Kraftfahrzeugfahrer benötigte Aufmerksamkeit minimal.

In weiterer vorteilhafter Ausgestaltung der Erfindung enthält das Anzeigefeld einen Feldbereich, in dem das aktuell letzte Einzelzeichen vergrößert dargestellt ist. Dieses Anzeigesegment zeigt somit jeweils die letzte Stelle an. Durch Betätigung der Löschtaste wird dann auch in diesem Einzelzeichenanzeigefeld das entsprechende Zeichen gelöscht und es erscheint dann das zuletzt gültige noch bestehende letzte Zeichen der Buchstaben- oder der Buchstaben/Ziffernfolge.

Gleiches gilt auch für die Auswahl von Ziffern zwischen 0 und 9.

In weiterer vorteilhafter Ausgestaltung der Erfindung wird die zusammenstellbare Ziffern- oder Zeichenfolge in einem separaten Fenster angezeigt, in welchem die Zeichen ggf. größer dargestellt sind, als in der Buchstaben/Ziffernleiste des Anzeigefeldes.

In weiterer vorteilhafter Ausgestaltung der Erfindung ist somit die Löschtaste mit dem jeweiligen Fenster logisch derart verknüpft, daß das jeweils gelöschte Zeichen auch im entsprechenden Fenster, wie oben bereits gesagt, gelöscht wird und das dann aktuell noch verbliebene letzte Zeichen im entsprechenden Fenster anzeigbar ist.

Vorteilhaft ist es das Korrekturelement neben, über oder unterhalb des drehbetätigbaren Bedienelementes anzuordnen. Hierdurch gewinnt die gesamte Einheit eine einfache, auch logisch zugeordnete Bedienweise.

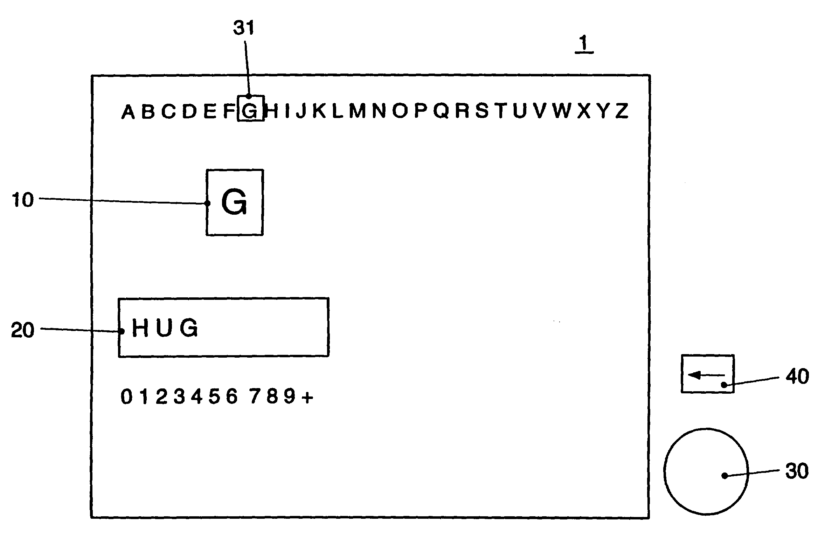

Die Erfindung ist in der Abbildung dargestellt und nachfolgend näher beschrieben.

Die Abbildung zeigt ein alphanumerisches Anzeigefeld 1 mit entsprechend bereits vorgenommener logischer Unterteilung der Anzeigenfläche. Im oberen Feldbereich ist die Buchstabenleiste angeordnet und im unteren Feldbereich die Ziffernleiste. Dazwischen ist ein bestimmtes Feld 10 zur vergrößerten Anzeige des jeweils zuletzt gewählten Buchstabens bzw. ggf. auch des aus der Buchstabenleiste aktuell ausgewählten Buchstabens dargestellt. Darunter ist ein Anzeigenfeld 20, in welchem die ausgewählte Zeichenfolge beispielsweise ein Wort, ein Name oder auch eine Ziffernfolge in logischem Zusammenhang aufgereiht wird. Des weiteren ist neben dem Anzeigenfeld ein drehbetätigbares Bedienelement 30 vorgesehen, über welches ein Cursor 31 entlang der Buchstaben oder Ziffernleiste bewegbar ist. Durch die Drehbetätigung des entsprechenden Bedienelementes wird ein Buchstabe oder eine Ziffer ausgewählt, die dann auch im zusätzlichen Anzeigefeld 10 vergrößert dargestellt wird. Durch Druckbetätigung des drehbetätigbaren Bedienelementes wird dann der entsprechende Buchstabe oder die entsprechende Ziffer oder Funktion ausgewählt und an die bereits im anderen Anzeigefeld 20 aufgereihte Buchstaben- oder Ziffernfolge angereiht. Liegt nun ein Fehler vor, so wird die oberhalb des drehbetätigbaren Bedienelementes 30 angeordnete Löschtaste 40 betätigt. Eine einfache Betätigung bewirkt die Löschung der letzten alphanumerischen Stelle und ein weiteres Betätigen sukzessive die weitere Löschung in entsprechender Reihenfolge. Der zuletzt gültige Buchstabe wird dabei in dem besagten zusätzlichen Anzeigefeld angezeigt, so daß vor Löschung derselbe noch einmal verifiziert werden kann. Wird dann die Löschtaste betätigt, so wird sowohl im oberen, als auch im unteren Anzeigefeld der entsprechende Buchstabe gelöscht und im oberen Anzeigefeld erscheint dann entsprechend vergrößert der somit zuletzt d.h. vorherig gültige, ungelöschte Buchstabe oder die entsprechende Ziffer.

Insgesamt entsteht eine einfache Löschfunktion, die ohne aufwendige Auswahlfunktion auskommt. Damit ist das gesamte System bedienfreundlicher, was im übrigen auch der Sicherheit im Fahrzeug zugute kommt. Dabei ist die zusätzliche und separate Löschtaste 40 in unmittelbarer Nähe zum Bedienmelement 30 plaziert.

## Patentansprüche

1. Multifunktionale Bedieneinrichtung für Kraftfahrzeuge mit einer alphanumerischen Eingabe- und Anzeigeeinheit, wobei die Eingabeeinheit ein zumindest drehbetätigbares Bedienelement aufweist, über welches auf der Anzeigeneinheit dargestellte alphanumerische Zeichen oder Signale auswähl - und zu einer Zeichen- oder Funktionsgruppe zusammenstellbar sind,
**dadurch gekennzeichnet,**
daß zur Aufhebung des jeweils zuletzt ausgewählten oder an letzter Stelle stehenden Zeichens ein Korrekturelement (40), insbesondere eine Löschtaste vorgesehen ist.

2. Multifunktionale Bedieneinrichtung nach Anspruch 1,
**dadurch gekennzeichnet,**
daß das Anzeigefeld (1) in Einzelzeichen anwählbar das Alphabet anzeigt.

3. Multifunktionale Bedieneinrichtung nach Anspruch 1 oder 2,
**dadurch gekennzeichnet,**
daß das Anzeigefeld (1) in Einzelzeichen anwählbar die Ziffern 0-9 anzeigt.

4. Multifunktionale Bedieneinrichtung nach einem der vorhergehenden Ansprüche,
**dadurch gekennzeichnet,**
daß das zuletzt angewählte Zeichen oder die zuletzt angewählte Ziffer in einem zusätzlichen Anzeigefeld (10) vergrößert anzeigbar ist.

5. Multifunktionale Bedieneinrichtung nach einem der vorhergehenden Ansprüche,
**dadurch gekennzeichnet,**
daß die zusammenstellbare Ziffern- und/oder Zeichenfolge in einem weiteren Anzeigefeld (20) anzeigbar ist.

6. Multifunktionale Bedieneinrichtung nach Anspruch 4 oder 5,
**dadurch gekennzeichnet,**
daß das Korrekturelement (40) mit dem jeweiligen Anzeigefeld (10,20) logisch derart verknüpft ist, daß das jeweils gelöschte Zeichen auch im entsprechenden Fenster gelöscht und das aktuell noch verbliebene letzte Zeichen im entsprechenden Fenster anzeigbar ist.

7. Multifunktionale Bedieneinrichtung nach einem der vorhergehenden Ansprüche,
**dadurch gekennzeichnet,**
daß das Korrekturelement (40) neben, über oder unterhalb des drehbetätigbaren Bedienelementes (30) angeordnet ist.
